# FASCICULE DE BREVET EUROPEEN

(11) **EP 3 525 958 B1**
(45) Date de publication et mention de la délivrance du brevet: **01.07.2020**
(21) Numéro de dépôt: 17780454.9
(22) Date de dépôt: 12.10.2017
(51) Int. Cl.: B22F 3/105, B33Y 30/00, B33Y 40/00, B29C 64/153, B29C 64/20, B29C 64/25

(54) **ATELIER MOBILE DE FABRICATION ADDITIVE MULTI-ENCEINTES**
MOBILES MEHRFACHGEHÄUSEWERKSTATT ZUR GENERATIVEN FERTIGUNG
MOBILE MULTI-HOUSING ADDITIVE MANUFACTURING WORKSHOP

(30) Priorité: 13.10.2016 FR 1659897
(43) Date de publication de la demande: 21.08.2019
(73) Titulaire: Addup, 63118 Cebazat (FR)
(72) Inventeur: NICAISE, Jean-Pierre, 63118 Cebazat (FR)
(74) Mandataire: Barascou, Frédéric
(86) Numéro de dépôt international: PCT/EP2017/076072
(87) Numéro de publication internationale: WO 2018/069447

(56) Documents cités:
- US-A1- 2012 077 429
- US-A1- 2013 109 291
- US-A1- 2016 229 005
- Shawn Moylan ET AL: "Lessons Learned in Establishing the NIST Metal Additive Manufacturing Laboratory", Lessons learned in establishing the NIST metal additive manufacturing laboratory, 1 juin 2013 (2013-06-01), XP055386292, DOI: 10.6028/NIST.TN.1801 Extrait de l'Internet: URL:http://nvlpubs.nist.gov/nistpubs/Techn icalNotes/NIST.TN.1801.pdf [extrait le 2017-06-28]
- Christian Seifarth: "CassaMobile_second_public_workshop_presen tation_Stuttgart", CassaMobile_second_public_workshop_present ation_Stuttgart, 24 août 2016 (2016-08-24), XP055386834, Stuttgart Extrait de l'Internet: URL:http://www.cassamobile.eu/disseminatio n/second_workshop/index.php [extrait le 2017-06-30]

## Description

L'invention se situe dans le domaine de la fabrication additive à base de poudre par fusion des grains de cette poudre à l'aide d'une source d'énergie ou de chaleur comme un faisceau laser, un faisceau d'électrons, ou des diodes par exemple.

Plus précisément, l'invention vise à faciliter l'accès aux procédés de fabrication additive. Afin de répondre à ce besoin, la publication US 2016/0229005 A1 et la présentation publique "CassaMobile_second_public_workshop_presentation_Stuttgart",Stuttgart, 24 août 2016 (2016-08-24), divulguent des ateliers de fabrication additive transportables, par exemple, par voie routière.

Actuellement, de plus en plus de secteurs industriels s'intéressent à la fabrication additive, on peut citer notamment l'aéronautique, l'automobile, l'horlogerie, le nucléaire, etc. En effet, les procédés de fabrication additive autorisent la fabrication de pièces irréalisables, ou alors difficilement, avec les méthodes de fabrication usuelles que sont le moulage et l'usinage pour les pièces métalliques, ou l'injection pour les matériaux à base de polymères.

Aussi, il existe sur le marché différents fabricants proposant différentes machines de fabrication additive susceptibles de répondre aux besoins industriels.

Jusqu'à aujourd'hui, les efforts de recherche et de développement se sont principalement concentrés sur la productivité des machines de fabrication additive en vue de réduire le coût d'exploitation de ces machines et le coût de revient des pièces fabriquées.

Toutefois, il existe une barrière à laquelle sont confrontés aujourd'hui les industriels souhaitant utiliser la fabrication additive : la sécurité des installations de fabrication additive, et plus particulièrement la sécurité des personnes emmenées à travailler sur les machines de fabrication additive et dans leur environnement proche.

En effet, les poudres de fabrication additive présentent divers dangers.

D'une part, certaines poudres de fabrication additive peuvent contenir des éléments chimiques qui sont allergènes ou même toxiques. Par exemple, certaines poudres de fabrication additive métallique peuvent contenir des éléments chimiques tels le nickel ou le cobalt. L'aspect toxique des poudres métallique utilisées en fabrication additive est divulgué par exemple dans la note technique 1801 du NIST intitulée "Lessons Learned in Establishing the NIST Metal Additive Manufacturing Laboratory, Shawn Moylan et al."

Ensuite, la fusion des grains de poudre dégagent des fumées contenant des gaz toxiques pour l'homme.

Aussi, pour parer de manière simple aux risques précités, les poudres de fabrication additive sont généralement stockées et transportées jusqu'aux machines de fabrication additive dans des containers étanches, et les chambres de fabrication des machines de fabrication additive sont des enceintes fermées.

En plus des risques précités, certaines poudres de fabrication additive présentent l'inconvénient de s'oxyder au contact de l'oxygène contenu dans l'atmosphère.

Aussi, pour éviter une telle oxydation, les chambres de fabrication des machines de fabrication additives sont remplies d'un gaz inerte tel l'azote ou l'argon.

Cet inertage des chambres de fabrication additives peut se révéler dangereux pour les personnes situées à proximité. En effet, en cas de fuite, le gaz inerte va progressivement se substituer à l'oxygène et provoquer l'asphyxie des personnes situées à proximité.

Aussi, la présente invention a pour objectif de répondre aux besoins industriels précités tout en garantissant un niveau optimal de sécurité des personnes emmenées à travailler sur les machines de fabrication additive et dans leur environnement proche.

A cet effet, l'invention a pour objet un atelier mobile de fabrication additive, l'atelier comprenant un cadre autoporteur principal permettant de rendre l'atelier transportable par voie routière, l'atelier comprenant une enceinte de fabrication principale supportée par le cadre principal et fermée de manière étanche par des panneaux fixés au cadre principal, au moins une machine de fabrication additive principale étant installée à l'intérieur de l'enceinte de fabrication principale, la machine de fabrication additive principale comprenant au moins une chambre de fabrication à l'intérieur de laquelle est mis en oeuvre un procédé de fabrication additive consistant à déposer de la poudre de fabrication additive et à fusionner les grains de cette poudre à l'aide d'une source d'énergie ou de chaleur, l'atelier comprenant un dispositif d'inertage principal permettant d'alimenter la chambre de fabrication de la machine avec un gaz inerte et permettant aussi de capter le gaz inerte pollué par les fumées issues de la fabrication additive à l'intérieur de la chambre de fabrication, un chemin de circulation principal étant prévu dans l'enceinte de fabrication principale pour permettre à un opérateur de circuler autour de la machine de fabrication additive principale, l'atelier comprenant un sas principal pour l'entrée et la sortie d'au moins un opérateur, et ce sas principal étant supporté par le cadre principal et fermé de manière étanche par des panneaux fixés au cadre autoporteur principal, une porte interne permet à un opérateur de circuler entre le sas principal et l'enceinte de fabrication principale, et une porte externe permet à un opérateur de circuler entre le sas principal et l'extérieur de l'atelier, l'atelier mobile comprenant au moins une enceinte auxiliaire de fabrication reliée de manière étanche à l'enceinte de fabrication principale, au moins une machine de fabrication additive auxiliaire étant installée à l'intérieur de cette enceinte de fabrication auxiliaire, l'atelier mobile comprenant un cadre autoporteur auxiliaire supportant cette enceinte de fabrication auxiliaire et indépendant du cadre autoporteur principal, cette enceinte de fabrication auxiliaire étant fermée de manière étanche par des panneaux fixés au cadre autoporteur auxiliaire, un chemin de circulation auxiliaire étant prévu dans l'enceinte de fabrication auxiliaire pour permettre à un opérateur de circuler autour de chaque machine de fabrication auxiliaire installée dans cette enceinte de fabrication auxiliaire.

D'autres caractéristiques et avantages de l'invention apparaîtront dans la description qui va suivre. Cette description, donnée à titre d'exemple et non limitative, se réfère aux dessins joints en annexe sur lesquels :
- la figure 1 est une représentation en perspective et en transparence d'une deuxième variante de réalisation de l'atelier mobile de fabrication additive selon l'invention,
- la figure 2 est une vue de dessus d'une première variante de réalisation de l'atelier mobile de fabrication additive selon l'invention,
- la figure 3 est une vue de dessus d'une troisième variante de réalisation de l'atelier mobile de fabrication additive selon l'invention,
- la figure 4 est une vue en perspective d'une quatrième variante de réalisation, dite multi-enceintes, de l'atelier mobile de fabrication additive selon l'invention, et
- la figure 5 est une vue en perspective d'une quatrième variante de réalisation, dite multi-enceintes, de l'atelier mobile de fabrication additive selon l'invention.

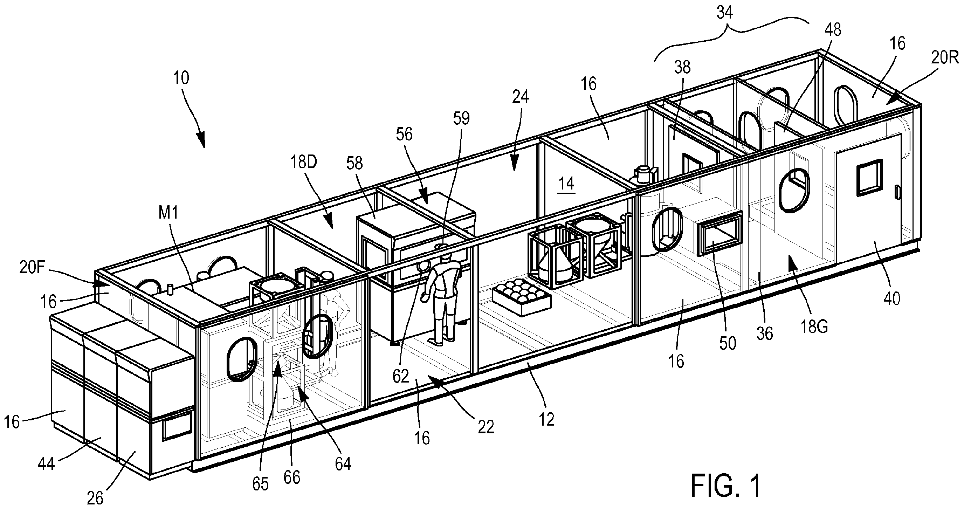

L'invention est relative à un atelier mobile de fabrication additive 10 tel qu'il est par exemple illustré en transparence en figure 1.

Afin de pouvoir transporter l'atelier 10 par voie routière, l'atelier 10 comprend un cadre autoporteur principal 12 et une enceinte de fabrication principale 14 supportée par le cadre principal 12 et fermée de manière étanche par des panneaux 16 fixés au cadre principal 12, les panneaux 16 étant transparents en figure 1 pour permettre de visualiser l'intérieur de l'enceinte de fabrication.

Plus précisément, l'atelier 10 et l'enceinte de fabrication principale 14 prennent la forme d'une enceinte parallélépipédique avec des parois latérales gauche 18G et droite 18D, des parois d'extrémité avant 20F et arrière 20R, un sol 22 et un toit 24, les panneaux 16 sont utilisés pour fermer ces différentes parois gauche 18G et droite 18D, avant 20F et arrière 20R, ainsi que le sol 22 et le toit 24.

Les panneaux 16 sont sensiblement étanches à l'eau et à l'air afin d'éviter toute fuite dangereuse de gaz, de poudre ou de liquide vers l'environnement extérieur à l'atelier.

De préférence, les panneaux 16 sont résistants au feu.

L'invention étant relative à un atelier mobile de fabrication additive, au moins une machine de fabrication additive principale M1 est installée à l'intérieur de l'enceinte de fabrication principale 14.

Cette machine de fabrication additive principale M1 comprend au moins une chambre de fabrication à l'intérieur de laquelle est mis en oeuvre un procédé de fabrication additive consistant à déposer de la poudre de fabrication additive et à fusionner les grains de cette poudre à l'aide d'une source d'énergie ou de chaleur comme un faisceau laser, un faisceau d'électrons, ou des diodes par exemple.

Parmi les différents procédés pouvant être mis en oeuvre à l'intérieur d'une machine M1 installée dans un atelier 10 selon l'invention, on peut citer les procédés de fabrication additive par dépôt de lit de poudre, par dépôt ponctuel de poudre, par dépôt de poudre selon un trajet prédéterminé, par la technique dite de « dépôt de matière sous flux d'énergie dirigée » consistant à déposer une poudre à l'aide d'une buse et à la solidifier en sortie de la buse à l'aide d'une source d'énergie ou de chaleur, ou par dépôt de poudre par projection.

En vue de l'inertage de la chambre de fabrication de la machine principale M1, l'atelier 10 comprend un dispositif d'inertage 26 principal permettant d'alimenter la chambre de fabrication de la machine principale M1 avec un gaz inerte tel de l'azote ou de l'argon. De plus, ce dispositif d'inertage 26 principal permet aussi de capter les fumées issues de la fabrication additive à l'intérieur de la chambre de fabrication. Enfin, le dispositif d'inertage 26 principal permet de filtrer les fumées pour pouvoir réinjecter le gaz inerte à l'intérieur de la chambre de fabrication de la machine M1, permettant ainsi une utilisation économique en cycle fermé du gaz inerte.

De préférence, les filtres utilisés pour piéger les particules des fumées de fabrication additive sont de classe F9 selon la norme de filtration EN779:2012 et ils permettent de piéger des particules de diamètre au moins égal à 1 micromètre.

D'autres gaz, comme par exemple du dioxygène, pouvant être présents en faible quantité, de l'ordre de quelques pourcents, dans la chambre de fabrication de la machine principale M1, la filtration effectuée par le dispositif d'inertage 26 principal permet aussi de séparer les particules des fumées de fabrication de ces autres gaz afin que ces autres gaz soit réinjecté dans la chambre de fabrication de la machine principale M1.

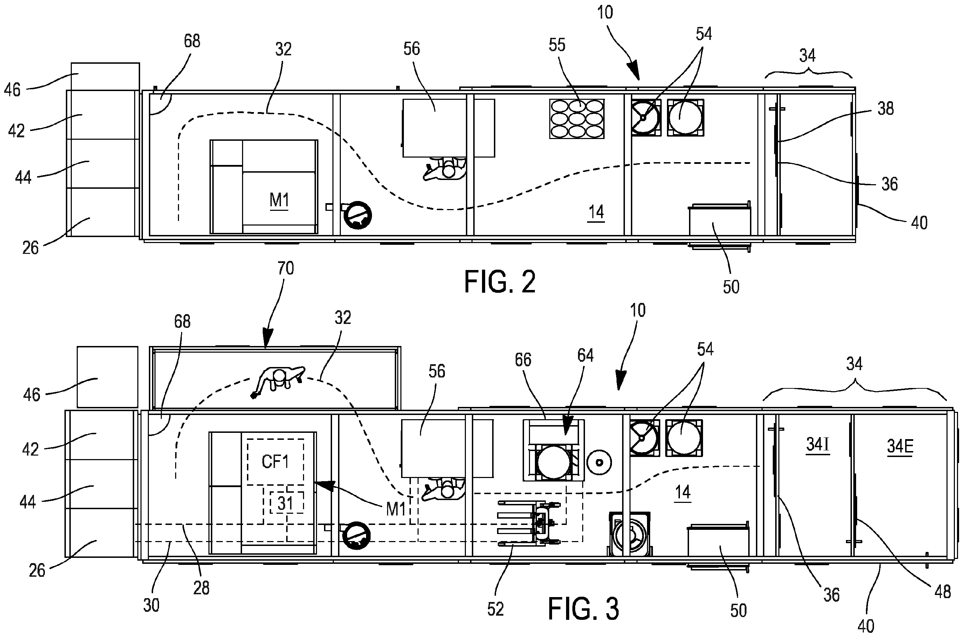

Comme cela est illustré schématiquement en figure 3, un premier conduit d'amenée 28 permet de conduire le gaz inerte, et éventuellement d'autres gaz, du dispositif d'inertage 26 principal vers la chambre de fabrication CF1 de la machine principale M1 et un second conduit d'évacuation 30 permet de conduire les fumées et une partie des gaz présents dans la chambre de fabrication CF1 vers le dispositif d'inertage 26 principal.

Avantageusement, un cyclone 31 présent dans la machine principale M1 et positionné en amont du second conduit d'évacuation 30 permet de séparer les particules de fumée d'au moins cinq micromètres du ou des gaz extrait avec les fumées de la chambre de fabrication CF1.

En plus de la filtration des fumées, le dispositif d'inertage 26 principal permet aussi de gérer la pression des gaz présents à l'intérieur de la chambre de fabrication CF1 de la machine principale M1. Ainsi, le dispositif d'inertage 26 principal permet par exemple d'abaisser la pression des gaz présent dans la chambre de fabrication CF1 de la machine principale M1 afin d'éviter les fuites de poudre vers l'extérieur de la machine.

Avantageusement, le dispositif d'inertage 26 principal se situe à l'extérieur de l'enceinte de fabrication 14. Ainsi, le dispositif d'inertage 26 principal ne se situe pas dans un environnement soumis aux dangers des poudres de fabrication, ce qui facilite toute intervention humaine sur ce dispositif, comme le changement des filtres précités ou des opérations de maintenance.

Toutefois, afin d'être facilement transporté avec l'enceinte de fabrication principale 14, le dispositif d'inertage 26 principal est lui aussi supporté par le cadre autoporteur principal 12.

L'atelier 10 selon l'invention est prévu pour accueillir un ou plusieurs opérateurs dans l'enceinte de fabrication principale 14. Comme l'illustre la figure 2, un chemin de circulation 32 principal est prévu dans l'enceinte de fabrication principale 14 pour permettre à un opérateur de circuler autour de la machine M1 de fabrication additive principale. Ainsi, l'opérateur peut charger un nouveau plateau de fabrication additive dans la chambre de fabrication CF1 de la machine principale M1, accéder aux moyens de paramétrage du cycle de fabrication additive à lancer, et décharger le plateau de fabrication additive avec la ou les pièces fabriquées.

Toujours en raison de la présence d'opérateurs dans l'atelier mobile 10, l'atelier mobile comprend un sas principal 34 pour l'entrée et la sortie d'au moins un opérateur. Ce sas principal 34 est supporté par le cadre principal 12 et fermé de manière étanche par des panneaux 16 fixés au cadre autoporteur principal 12. Plus précisément, le sas principal 34 se situe dans le prolongement de l'enceinte de fabrication principale 14 et il est isolé de cette enceinte par une cloison 36 faite par exemple de panneaux 16. Une porte interne 38 permet à un opérateur de circuler entre le sas principal 34 et l'enceinte de fabrication principale 14, et une porte externe 40 permet à un opérateur de circuler entre le sas principal 34 et l'extérieur de l'atelier mobile 10.

Ce sas principal 34 constitue une première barrière aux fuites de poudre car il permet d'éviter de mettre l'intérieur de l'enceinte de fabrication principale 14 en communication directe avec l'extérieur de l'atelier. Avantageusement, ce sas 34 est aussi utilisé par les opérateurs pour enfiler leurs équipements de protection, tels que des combinaisons, des gants, des lunettes ou des masques avec respirateur, avant de pénétrer dans l'enceinte de fabrication principale 14 et pour se débarrasser de ces équipements avant de sortir de l'atelier mobile 10.

Outre le sas principal 34 et toujours pour améliorer la sécurité des personnes emmenées à circuler aux abords de l'atelier 10 et à l'intérieur de l'enceinte de fabrication principale 14, l'atelier comprend un dispositif principal 42 de traitement de l'air circulant à l'intérieur de l'enceinte de fabrication principale 14.

Tout d'abord, ce dispositif principal de traitement 42 permet d'alimenter l'intérieur de l'enceinte de fabrication principale 14 avec de l'air prélevé à l'extérieur de l'atelier.

Ensuite, et toujours en vue du renouvellement de l'air à l'intérieur de l'atelier, ce dispositif principal de traitement 42 permet aussi de prélever l'air présent dans l'enceinte de fabrication principale 14 et dans le sas principal 34. L'air qui a circulé dans l'enceinte de fabrication 14 pouvant contenir des particules de poudre de fabrication additive, le dispositif principal de traitement 42 permet de filtrer l'air capté dans l'enceinte de fabrication principale 14 et dans le sas principal 34 avant d'expulser cet air vers l'air extérieur à l'atelier. De préférence, les filtres utilisés pour séparer les particules de poudre de fabrication additive de l'air capté dans l'enceinte de fabrication principale 14 et dans le sas principal 34 sont de type HEPA (pour High Efficiency Particulate Air) et ces filtres permettent de capturer des particules de poudre de diamètre au moins égal à 0,3 micromètre.

Afin de limiter les fuites de poudre vers l'extérieur de l'atelier, le dispositif principal de traitement 42 permet aussi de gérer la pression de l'air présent dans l'enceinte de fabrication principale 14 et dans le sas principal 34. Plus précisément, ce dispositif principal de traitement 42 est utilisé pour abaisser la pression dans l'enceinte de fabrication principale 14 et dans le sas principal 34 afin de retenir les particules et les grains de poudre à l'intérieur de l'atelier. De préférence, la pression de l'air à l'intérieur de l'enceinte de fabrication principale 14 est inférieure à la pression de l'air à l'intérieur du sas principal 34, et la pression de l'air à l'intérieur du sas principal 34 est inférieure à la pression de l'air extérieur à l'atelier.

La mise en oeuvre d'un procédé de fabrication additive libérant une grande quantité de chaleur, le dispositif principal de traitement 42 permet aussi de réguler, et plus exactement de refroidir, la température de l'air présent dans l'enceinte de fabrication principale 14 et dans le sas principal 34.

Parallèlement à cette régulation en température, ce dispositif principal de traitement 42 permet aussi de réguler le taux d'humidité de l'air présent dans l'enceinte de fabrication principale 14 et dans le sas principal 34. En effet, un taux d'humidité trop important dans l'enceinte de fabrication principale 14 peut conduire à la présence d'eau dans la chambre de fabrication de la machine principale M1 et nuire à la qualité de la fusion des grains de poudre et donc à celle des pièces fabriquées. De préférence, le taux d'humidité dans l'enceinte de fabrication principale 14 est maintenu inférieur à 40%.

En vue de renforcer la sécurité des opérateurs à l'intérieur de l'enceinte de fabrication principale 14, le dispositif principal de traitement 42 permet aussi de surveiller le taux de dioxygène dans l'air présent à l'intérieur de l'enceinte de fabrication principale 14. En effet, malgré les moyens d'étanchéité équipant la chambre de fabrication CF1 et toutes les précautions possibles, il peut arriver que le gaz inerte introduit dans la chambre de fabrication CF1 s'échappe de cette chambre et se substitue à d'autres gaz, comme par exemple le dioxygène, dans l'air présent dans la chambre de fabrication principale 14. Plus précisément, deux seuils d'alerte sont prévus : un premier signal d'alerte est généré lorsque le taux de dioxygène dans l'air présent dans l'enceinte de fabrication principale 14 est inférieur à 20%, et un second signal d'alerte est généré lorsque le taux de dioxygène dans l'air présent dans l'enceinte de fabrication principale 14 est inférieur à 18%. Dans la pratique, le premier seuil d'alerte est préventif et indique aux opérateurs qu'ils doivent évacuer l'enceinte de fabrication principale 14, et le second signal d'alerte est une alarme visant à faire évacuer l'enceinte de fabrication principale 14 ainsi que l'environnement dans lequel se situe l'atelier mobile 10.

Avantageusement, le dispositif principal de traitement 42 se situe à l'extérieur de l'enceinte de fabrication 14. Ainsi, le dispositif principal de traitement 42 ne se situe pas dans un environnement soumis aux dangers des poudres de fabrication, ce qui facilite toute intervention humaine sur ce dispositif, comme le changement des filtres précités ou des opérations de maintenance.

Toutefois, afin d'être facilement transporté avec l'enceinte de fabrication principale 14, le dispositif principal de traitement 42 est lui aussi supporté par le cadre autoporteur principal 12.

Les différents composants permettant au dispositif d'inertage 26 et au dispositif principal 42 de remplir les fonctions qui viennent d'être décrites peuvent prendre diverses formes connues de l'homme du métier associé à chacune de ses différentes fonctions. Notamment, ne sont ni représentés ni décrits les moyens tels des conduites, des aérateurs, des extracteurs et des ventilateurs qui permettent au dispositif principal 42 de traiter l'air circulant dans l'enceinte de fabrication principale 14.

Afin d'alimenter le dispositif d'inertage 26 principal et le dispositif principal de traitement 42, la machine de fabrication additive principale M1, ainsi que tout autre dispositif présent à l'intérieur ou à l'extérieur de l'atelier mobile 10 et nécessitant une alimentation en énergie électrique, l'atelier comprend une armoire électrique 44 principale regroupant les circuits de puissance et de commande des dispositifs et de la machine précités.

Avantageusement, et comme le dispositif d'inertage 26 principal et le dispositif principal de traitement 42, l'armoire électrique 44 principale se situe de préférence à l'extérieur de l'enceinte de fabrication principale 14. Ainsi, cette armoire électrique 44 principale ne se situe pas dans un environnement soumis aux dangers des poudres de fabrication, ce qui facilite toute intervention humaine, comme par exemple des opérations de maintenance.

Toutefois, afin d'être facilement transportée avec l'enceinte de fabrication principale 14, l'armoire électrique 44 principale est elle aussi supportée par le cadre autoporteur principal 12.

Plus précisément, le dispositif d'inertage 26 principal, le dispositif principal de traitement 42, et l'armoire électrique 44 principale prennent la forme de trois blocs accolés à l'avant de l'atelier mobile 10, contre la paroi d'extrémité avant 20F de l'atelier.

En parallèle de l'alimentation de la machine principale M1 en gaz inerte, du traitement de l'air circulant dans l'enceinte de fabrication principale14 et de l'alimentation en énergie électrique, l'atelier mobile 10 comprend aussi une alimentation en eau. Cette eau peut être utilisée à des fins industrielles pour rincer ou nettoyer les pièces fabriquées ou certaines parties ou composants des dispositifs précédemment décrits, et/ou cette eau peut aussi être utilisée par les opérateurs pour se laver ou se rincer certaines parties du corps susceptibles d'être exposées aux grains de poudre malgré les équipements de protection.

Aussi, l'eau ainsi utilisée pouvant contenir des grains de poudre avec des composés toxiques, l'atelier mobile 10 comprend un dispositif de récupération 46 principal des eaux usées. Ce dispositif de récupération 46 principal prend la forme d'un container permettant de stocker temporairement les eaux usées avant qu'elles ne soient récupérées et traitées par une société spécialisée.

Avantageusement, le dispositif de récupération 46 principal se situe de préférence à l'extérieur de l'enceinte de fabrication principale 14. Ce dispositif de récupération 46 principal est aussi de préférence supporté par le cadre autoporteur principal 12.

Plus précisément, le dispositif de récupération 46 principal prend la forme d'un bloc accolé au dispositif d'inertage 26, au dispositif principal de traitement 42, et à l'armoire électrique 44 principale à l'avant de l'atelier mobile 10, à proximité de la paroi d'extrémité avant 20F de l'atelier.

Dans une première variante de réalisation de l'atelier 10 mobile tel qu'illustrée en figure 2, le sas principal 34 ne comprend qu'une seule pièce.

Toutefois, dans une deuxième variante de réalisation illustrée par la figure 1, le sas principal 34 comprend deux pièces en communication l'une avec l'autre : une pièce extérieure 34E étant en communication avec l'extérieur de l'atelier 10 via la porte externe 40, une pièce intérieure 34I étant en communication avec l'enceinte principale 14 via la porte interne 36, et la pièce intérieure 34I communiquant avec la pièce extérieure 34E via une porte intermédiaire 48.

Ce double sas 34 est avantageux car il forme une double barrière aux éventuelles fuites de poudre lors de l'entrée/sortie des opérateurs.

Bien entendu, le dispositif principal de traitement 42 permet d'assurer le recyclage de l'air dans ces deux pièces 34I,34E du sas principal 34 et de réguler sa température et son taux d'humidité.

Parallèlement, le dispositif principal de traitement 42 permet aussi de gérer la pression de l'air dans chacune de ces deux pièces 34I,34E du sas principal 34. Ainsi, de préférence, la pression de l'air présent dans l'enceinte de fabrication principale 14 est supérieure à la pression de l'air présent dans la pièce intérieure 34I du sas principal, la pression de l'air présent dans la pièce intérieure 34I du sas principal est supérieure à la pression de l'air présent dans la pièce extérieure 34E du sas principal, et la pression de l'air présent dans la pièce extérieure 34E du sas principal est supérieure à la pression de l'air présent à l'extérieur à l'atelier 10 mobile.

Pour l'entrée/sortie de différentes fournitures ou matériels, comme par exemple des lots de pots de poudre de fabrication additive destinée à alimenter la machine principale M1, l'atelier mobile 10 comprend un sas auxiliaire 50. Ce sas auxiliaire est de dimensions inférieures à celle du sas principal 34, et il est par exemple prévu au travers d'une paroi latérale de l'atelier mobile, comme par exemple la paroi latérale gauche 18G.

Pour faciliter la manutention des produits entrant et sortant de l'atelier 10 mobile par le sas auxiliaire 50, au moins un outil de manutention 52 est prévu à l'intérieur de l'enceinte de fabrication 14 principale.

Cet outil de manutention 52 est par exemple utilisé par un opérateur pour déplacer un container 54 destiné à alimenter la machine principale M1 en poudre neuve, ou pour déplacer un autre container 54 permettant de recycler la poudre ayant déjà été utilisée pour alimenter la machine principale M1 mais n'ayant pas été fusionnée.

En vue de protéger au mieux les opérateurs d'une exposition aux grains de poudre de fabrication additive, l'atelier 10 mobile comprend un dispositif de transvasement 56 comprenant une enceinte 58 fermée de manière étanche, au moins une vitre 60 permettant à un opérateur de voir à l'intérieur de l'enceinte 58, et des ronds de gant 62 permettant à un opérateur de manipuler des pots de poudre 55 à l'intérieur de l'enceinte fermée. Par pots de poudre 55, il faut comprendre des récipients de plus petite contenance que les containers 54 et pouvant être transportés et manipulés par un opérateur sans outil de manutention 52. Ces pots de poudre 55 sont des récipients étanches utilisés pour stocker et transporter la poudre sous atmosphère contrôlée, et de préférence inerte. Ce dispositif de transvasement 56 et son enceinte 58 sont utilisés pour transvaser en toute sécurité la poudre neuve depuis des pots 55 dans un container 54, ainsi que pour maintenir la poudre sous atmosphère contrôlée et de préférence inerte.

Avantageusement, et afin de préserver les qualités de la poudre de fabrication additive en y introduisant un gaz inerte tel l'azote ou l'argon, l'enceinte 58 du dispositif de transvasement 56 peut être reliée au dispositif d'inertage 26 via le conduit d'amenée 28 et le conduit d'évacuation 30. Eventuellement, le conduit 30 peut être relié à l'enceinte 58 du dispositif de transvasement 56 pour retirer le gaz inerte de l'enceinte 58, par exemple lorsqu'un opérateur doit ouvrir l'enceinte 58 pour y introduire des pots 55.

En parallèle du dispositif de transvasement 56, l'atelier 10 peut aussi comprendre un dispositif de tamisage 64 permettant de transférer de la poudre d'un premier container 54 vers un autre container 54 tout en effectuant un tamisage de cette poudre via un tamiseur 65. Ce dispositif de tamisage 64 est utilisé pour recycler la poudre de fabrication additive ayant déjà été utilisée pour alimenter la machine principale M1 mais n'ayant pas été fusionnée. Eventuellement, le dispositif de tamisage 64 peut aussi être utilisé pour tamiser de la poudre neuve. En vue de ce tamisage, la poudre neuve doit d'abord être transvasée dans un container 54, par exemple avec le dispositif de transvasement 56. Avantageusement, et toujours en vue de protéger les opérateurs, ce dispositif de tamisage 64 est de préférence agencé à l'intérieur d'une enceinte 66 fermée de manière étanche et située à l'intérieur de l'enceinte de fabrication principale 14.

Avantageusement, et afin de préserver les qualités de la poudre de fabrication additive en y introduisant un gaz inerte tel l'azote ou l'argon, le circuit du dispositif de tamisage 64 peut être relié au dispositif d'inertage 26 via le conduit d'amenée 28 pour alimenter ce circuit en gaz inerte. Eventuellement, le circuit du dispositif de tamisage 64 peut aussi être relié au dispositif d'inertage 26 via le conduit d'évacuation 30 pour récupérer une partie du gaz inerte insufflé dans ce circuit. Le circuit du dispositif de tamisage 64 est formé par le container 54 de poudre à tamiser, le tamiseur 65, le container 54 de réception de la poudre tamisée et les différents raccords et vannes se situant entre ces éléments.

Le dispositif de transvasement 56 et le dispositif de tamisage 60 sont particulièrement importants dans la maîtrise du circuit suivi par la poudre à l'intérieur de l'enceinte de fabrication principale 14 et vis-à-vis de la sécurité des personnes emmenées à travailler dans l'enceinte de fabrication principale 14 de l'atelier mobile 10, ou dans une autre enceinte de fabrication de cet atelier.

En complément des dispositifs précédemment décrits et contribuant à la sécurité des opérateurs, le dispositif de traitement principal 42 peut comprendre des moyens permettant de saturer l'air présent dans l'enceinte principale 14 avec un gaz inerte, tel l'azote. Cette saturation en gaz inerte permet d'empêcher un départ d'incendie à l'intérieur de l'enceinte de fabrication principale 14. Bien entendu, cette opération ne peut avoir lieu qu'une fois toute personne évacuée de l'enceinte de fabrication principale 14.

En complément aussi, l'atelier mobile 10 peut comprendre un dispositif 68 de pulvérisation dans l'enceinte de fabrication principale 14 d'une poudre permettant d'inhiber un départ d'incendie.

Dans une troisième variante de réalisation illustrée en figure 3 et visant à permettre l'installation dans l'enceinte de fabrication principale 14 d'une machine principale M1 offrant des capacités de production plus importantes mais présentant aussi un encombrement plus important, l'atelier mobile 10 comprend un module d'extension 70 du volume de l'enceinte de fabrication principale 14. Ce module d'extension 70 est autoporteur mais fixé au châssis autoporteur principal 12. Ce module d'extension 70 est prévu en face de l'emplacement de la machine principale M1 dans l'enceinte de fabrication principale 14. Ce module d'extension 70 permet d'élargir l'enceinte de fabrication principale 14 à proximité de la machine principale M1 afin que le chemin de circulation 32 permette à un opérateur de circuler autour de la machine malgré son encombrement important.

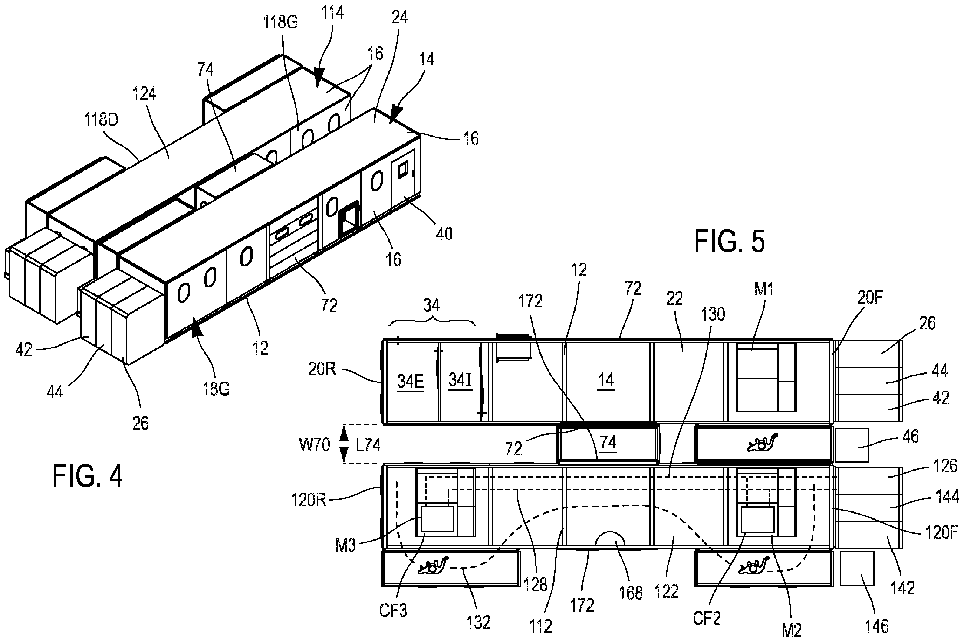

Dans un objectif semblable d'accroissement de la capacité de production offerte par l'atelier mobile 10 selon l'invention, et comme l'illustrent les figures 4 et 5, l'atelier mobile 10 peut comprendre au moins une enceinte auxiliaire de fabrication 114 reliée de manière étanche à l'enceinte de fabrication principale 14, au moins une machine de fabrication additive auxiliaire M2 étant installée à l'intérieur de cette enceinte de fabrication auxiliaire.

De préférence, deux machines M2 et M3 de fabrication additive auxiliaires sont installées à l'intérieur de cette enceinte de fabrication auxiliaire 114. Une machine est installée à l'avant de l'enceinte de fabrication auxiliaire 114 et l'autre machine est installée à l'arrière de l'enceinte de fabrication auxiliaire 114.

Pour supporter cette enceinte de fabrication auxiliaire 114, l'atelier mobile 10 comprend un cadre autoporteur auxiliaire 112, indépendant du cadre autoporteur principal 12. Ainsi, cette enceinte de fabrication auxiliaire 114 peut être transportée par voie routière par un autre véhicule que celui transportant l'enceinte de fabrication principale 14.

Comme l'enceinte de fabrication principale 14, l'enceinte de fabrication secondaire 114 est fermée de manière étanche par des panneaux 16 fixés au cadre secondaire.

Plus précisément, l'enceinte de fabrication secondaire 114 est parallélépipédique avec des parois latérales gauche 118G et droite 118D, des parois d'extrémité avant 120F et arrière 120R, un sol 122 et un toit 124, les panneaux 16 étant utilisés pour fermer ces différentes parois gauche 118G et droite 118D, avant 120F et arrière 120R, ainsi que le sol 122 et le toit 124.

Un chemin de circulation auxiliaire 132 est prévu dans l'enceinte de fabrication auxiliaire 114 pour permettre à un opérateur de circuler autour de chaque machine de fabrication auxiliaire (M2,M3) installée dans cette enceinte de fabrication auxiliaire 114.

En vue de relier les deux enceintes principale 14 et secondaire 114, chacune de ces enceintes comprend au moins une porte 72,172, de préférence sectionnelle, et un couloir de jonction 74 est installé entre ces deux portes. Ce couloir de jonction 74 est aussi réalisé avec des panneaux 16. Des moyens d'étanchéité, comme par exemple des joints, sont prévus au niveau des jointures entre le couloir 74 et les portes 72,172. Ce couloir de jonction 74 permet aux opérateurs de circuler librement entre le chemine de circulation principal 32 de l'enceinte principale 14 et le chemin de circulation auxiliaire 132 de l'enceinte auxiliaire 114.

L'enceinte principale 14 pouvant être équipée d'un module d'extension 70, la longueur L74 du couloir de jonction 74 est au moins égale à la largeur W70 du module d'extension 70.

De préférence, une porte 72, 172 se situe sur une paroi latérale droite 18D,118D ou gauche 18G,118G de son enceinte 14,114. Pour permettre un agencement flexible, chaque paroi latérale droite 18D,118D et gauche 18G,118G de chaque enceinte 14,114 comprend une porte 72,172.

Avantageusement, en prévoyant des portes 72,172 de chaque côté de chaque enceinte 14,114, il est possible de connecter une pluralité d'enceintes de fabrication auxiliaires 114 à l'enceinte de fabrication principale. L'invention couvre bien entendu de telles variantes de réalisation de l'atelier mobile dans lesquelles deux, trois, quatre, etc enceintes de fabrication auxiliaires 114 sont connectées à une enceinte de fabrication principale 14, et dans lesquelles, au moins une, et de préférence deux, machine(s) de fabrication additive auxiliaires sont installées dans chacune de ces enceintes de fabrication auxiliaires 114.

En vue de l'inertage des chambres de fabrication des machines auxiliaires M2,M3, l'atelier 10 comprend un dispositif d'inertage 126 auxiliaire permettant d'alimenter les chambres de fabrication des machines auxiliaires M2,M3 avec un gaz inerte tel de l'azote ou de l'argon. De plus, ce dispositif d'inertage 126 auxiliaire permet aussi de capter les fumées issues de la fabrication additive à l'intérieur des chambres de fabrication. Enfin, le dispositif d'inertage 126 auxiliaire permet de filtrer les fumées pour pouvoir réinjecter le gaz inerte à l'intérieur des chambres de fabrication des machines auxiliaires M2,M3, permettant ainsi une utilisation économique en cycle fermé du gaz inerte.

De préférence, les filtres utilisés pour piéger les particules des fumées de fabrication additive sont de classe F9 selon la norme de filtration EN779:2012 et ils permettent de piéger des particules de diamètre au moins égal à 1 micromètre.

D'autres gaz, comme par exemple du dioxygène, pouvant être présents en faible quantité, de l'ordre de quelques pourcents, dans les chambres de fabrication des machines auxiliaires, la filtration effectuée par le dispositif d'inertage 126 auxiliaire permet aussi de séparer les particules des fumées de fabrication de ces autres gaz afin que ces autres gaz soit réinjecté dans les chambres de fabrication des machines auxiliaires M2,M3.

Comme cela est illustré schématiquement en figure 5, un premier conduit d'amenée 128 permet de conduire le gaz inerte, et éventuellement d'autres gaz, du dispositif d'inertage 126 auxiliaire vers les chambres de fabrication CF2,CF3 des machines auxiliaires M2,M3 et un second conduit d'évacuation 130 permet de conduire les fumées et une partie des gaz présents dans les chambres de fabrication CF2,CF3 vers le dispositif d'inertage 126 auxiliaire.

Avantageusement, un cyclone présent dans chaque machine auxiliaire M2,M3 et positionné en amont du second conduit d'évacuation 30 permet de séparer les particules de fumée d'au moins cinq micromètres du ou des gaz extrait avec les fumées des chambres de fabrication CF2,CF3.

En plus de la filtration des fumées, le dispositif d'inertage 126 auxiliaire permet aussi de gérer la pression des gaz présents à l'intérieur des chambres de fabrication CF2,CF3 des machines auxiliaires M2,M3. Ainsi, le dispositif d'inertage 126 auxiliaire permet par exemple d'abaisser la pression des gaz présent dans les chambres de fabrication CF2,CF3 des machines auxiliaires M2,M3 afin d'éviter les fuites de poudre vers l'extérieur des machines.

Comme cela vient d'être décrit, le dispositif d'inertage auxiliaire 126 est indépendant du dispositif d'inertage 26 principal. De plus, le dispositif d'inertage 126 auxiliaire se situe à l'extérieur de l'enceinte de fabrication auxiliaire 114. Avantageusement, le dispositif d'inertage 126 auxiliaire est supporté par le cadre autoporteur auxiliaire 112.

Pour éviter un surdimensionnement du dispositif principal 42 de traitement de l'air circulant à l'intérieur de l'enceinte de fabrication principale 14, l'atelier comprend un dispositif auxiliaire de traitement 142 venant seconder le dispositif principal de traitement 42 dans le traitement de l'air circulant dans les différentes enceintes 14,114.

Ce dispositif auxiliaire de traitement 142 est indépendant du dispositif principal de traitement 42. Ce dispositif auxiliaire de traitement 142 permet d'alimenter l'enceinte de fabrication auxiliaire 114, et donc l'enceinte de fabrication principale 14, avec de l'air prélevé à l'extérieur de l'atelier.

L'air qui a circulé dans les enceintes 14,114 pouvant contenir des particules de poudre de fabrication additive, le dispositif auxiliaire de traitement 142 permet de filtrer l'air capté avant d'expulser cet air vers l'air extérieur à l'atelier. De préférence, les filtres utilisés pour séparer les particules de poudre de fabrication additive de l'air capté sont de type HEPA (pour High Efficiency Particulate Air) et ces filtres permettent de capturer des particules de poudre de diamètre au moins égal à 0,3 micromètre.

Afin de limiter les fuites de poudre vers l'extérieur de l'atelier, le dispositif auxiliaire de traitement 142 permet aussi de gérer la pression de l'air présent dans les enceintes 14,. Plus précisément, ce dispositif auxiliaire de traitement 142 est utilisé pour abaisser la pression dans les enceintes afin de retenir les particules et les grains de poudre à l'intérieur de l'atelier. De préférence, la pression de l'air à l'intérieur des enceintes de fabrication 14,114 est inférieure à la pression de l'air à l'intérieur du sas principal 34, et la pression de l'air à l'intérieur du sas principal 34 est inférieure à la pression de l'air extérieur à l'atelier.

La mise en oeuvre d'un procédé de fabrication additive libérant une grande quantité de chaleur, le dispositif auxiliaire de traitement 142 permet aussi de réguler, et plus exactement de refroidir, la température de l'air présent dans les enceintes de fabrication 14,114 et dans le sas principal 34.

Parallèlement à cette régulation en température, ce dispositif auxiliaire de traitement 142 permet aussi de réguler le taux d'humidité de l'air présent dans les enceintes de fabrication 14,114 et dans le sas principal 34.

En vue de renforcer la sécurité des opérateurs à l'intérieur des enceintes de fabrication 14,114, le dispositif auxiliaire de traitement 142 permet aussi de surveiller le taux de dioxygène dans l'air présent à l'intérieur des enceintes de fabrication.

Avantageusement, le dispositif auxiliaire de traitement 42 se situe à l'extérieur de l'enceinte de fabrication auxiliaire 114. De plus, le dispositif auxiliaire de traitement 142 est lui aussi supporté par le cadre autoporteur auxiliaire 112.

Afin d'alimenter le dispositif d'inertage 126 auxiliaire et le dispositif auxiliaire de traitement 142, les machines de fabrication additive auxiliaires M2,M3, ainsi que tout autre dispositif nécessitant une alimentation en énergie électrique, l'atelier comprend une armoire électrique 144 auxiliaire regroupant les circuits de puissance et de commande des dispositifs et de la machine précités. Cette armoire électrique 144 auxiliaire est indépendante de l'armoire électrique 44 principale.

Avantageusement, et comme le dispositif d'inertage 126 auxiliaire et le dispositif auxiliaire de traitement 142, l'armoire électrique 144 auxiliaire se situe de préférence à l'extérieur de l'enceinte de fabrication auxiliaire 114. De plus, l'armoire électrique 144 auxiliaire est supportée par le cadre autoporteur auxiliaire 112.

Plus précisément, le dispositif d'inertage 126 auxiliaire, le dispositif auxiliaire de traitement 142, et l'armoire électrique 144 auxiliaire prennent la forme de trois blocs accolés à l'avant de l'enceinte de fabrication auxiliaire 114.

L'atelier mobile 10 comprend aussi un dispositif de récupération 146 auxiliaire des eaux usées. Ce dispositif de récupération 146 est indépendant du dispositif de récupération principal 46. Ce dispositif de récupération 146 auxiliaire prend la forme d'un container permettant de stocker temporairement les eaux usées avant qu'elles ne soient récupérées et traitées par une société spécialisée.

Avantageusement, le dispositif de récupération 146 auxiliaire se situe de préférence à l'extérieur de l'enceinte de fabrication auxiliaire 114. Ce dispositif de récupération 146 auxiliaire est aussi de préférence supporté par le cadre autoporteur auxiliaire 112.

Plus précisément, le dispositif de récupération 146 auxiliaire prend la forme d'un bloc accolé au dispositif d'inertage 126 auxiliaire, au dispositif auxiliaire de traitement 142, et à l'armoire électrique 144 auxiliaire à l'avant de l'enceinte de fabrication auxiliaire 114, à proximité de la paroi d'extrémité avant 20F de cette enceinte.

En complément des dispositifs précédemment décrits et contribuant à la sécurité des opérateurs, le dispositif de traitement auxiliaire 142 peut comprendre des moyens permettant de saturer l'air présent dans les enceintes 14,114 avec un gaz inerte, tel l'azote.

En complément aussi, l'atelier mobile 10 peut comprendre un dispositif 168 de pulvérisation dans l'enceinte de fabrication auxiliaire 114 d'une poudre permettant d'inhiber un départ d'incendie.

En complément, l'atelier mobile 10 peut aussi comprendre un ou des modules d'extension auxiliaires 170 du volume de l'enceinte de fabrication auxiliaire 114. Chaque module d'extension auxiliaire 170 est autoporteur mais fixé au châssis autoporteur auxiliaire 112. Un module d'extension auxiliaire 170 est prévu en face de l'emplacement de chaque machine auxiliaire M2,M3 dans l'enceinte de fabrication auxiliaire 14. Chaque module d'extension auxiliaire 170 permet d'élargir l'enceinte de fabrication auxiliaire 114 à proximité d'une machine auxiliaire M2,M3 afin que le chemin de circulation auxiliaire 132 permette à un opérateur de circuler autour de ces machines malgré leur encombrement important.

## Revendications

1. Atelier (10) mobile de fabrication additive, l'atelier comprenant un cadre autoporteur principal (12) permettant de rendre l'atelier transportable par voie routière, l'atelier comprenant une enceinte de fabrication principale (14) supportée par le cadre principal et fermée de manière étanche par des panneaux (16) fixés au cadre principal, au moins une machine de fabrication additive principale (M1) étant installée à l'intérieur de l'enceinte de fabrication principale, la machine de fabrication additive principale (M1) comprenant au moins une chambre de fabrication à l'intérieur de laquelle est mis en oeuvre un procédé de fabrication additive consistant à déposer de la poudre de fabrication additive et à fusionner les grains de cette poudre à l'aide d'une source d'énergie ou de chaleur, l'atelier comprenant un dispositif d'inertage (26) principal permettant d'alimenter la chambre de fabrication (CF1) de la machine (M1) avec un gaz inerte et permettant aussi de capter le gaz inerte pollué par les fumées issues de la fabrication additive à l'intérieur de la chambre de fabrication (CF1), un chemin de circulation (32) principal étant prévu dans l'enceinte de fabrication principale (14) pour permettre à un opérateur de circuler autour de la machine (M1) de fabrication additive principale, l'atelier comprenant un sas principal (34) pour l'entrée et la sortie d'au moins un opérateur, et ce sas principal (34) étant supporté par le cadre principal (12) et fermé de manière étanche par des panneaux (16) fixés au cadre autoporteur principal (12), une porte interne (38) permet à un opérateur de circuler entre le sas principal (34) et l'enceinte de fabrication principale (14), et une porte externe (40) permet à un opérateur de circuler entre le sas principal (34) et l'extérieur de l'atelier (10), l'atelier mobile comprenant au moins une enceinte auxiliaire de fabrication (114) reliée de manière étanche à l'enceinte de fabrication principale (14), au moins une machine de fabrication additive auxiliaire (M2,M3) étant installée à l'intérieur de cette enceinte de fabrication auxiliaire (114), l'atelier mobile comprenant un cadre autoporteur auxiliaire (112) supportant cette enceinte de fabrication auxiliaire (114) et indépendant du cadre autoporteur principal (12), cette enceinte de fabrication auxiliaire (114) étant fermée de manière étanche par des panneaux (16) fixés au cadre autoporteur auxiliaire (112), un chemin de circulation auxiliaire (132) étant prévu dans l'enceinte de fabrication auxiliaire (114) pour permettre à un opérateur de circuler autour de chaque machine de fabrication auxiliaire (M2,M3) installée dans cette enceinte de fabrication auxiliaire (114).

2. Atelier mobile de fabrication additive selon la revendication 1, dans lequel deux machines (M2,M3) de fabrication additive auxiliaires sont installées à l'intérieur de l'enceinte de fabrication auxiliaire (114).

3. Atelier mobile de fabrication additive selon l'une des revendications précédentes, dans lequel chacune des enceintes (14,114) comprend au moins une porte (72,172), et dans lequel un couloir de jonction (74) est installé entre ces deux portes.

4. Atelier mobile de fabrication additive selon l'une des revendications précédentes, dans lequel, l'atelier (10) comprenant un dispositif d'inertage (126) auxiliaire permettant d'alimenter la chambre de fabrication de chaque machine auxiliaire (M2,M3) avec un gaz inerte et de capter les fumées issues de la fabrication additive à l'intérieur de chaque chambre de fabrication d'une machine auxiliaire (M2,M3), le dispositif d'inertage auxiliaire (126) est indépendant du dispositif d'inertage (26) principal.

5. Atelier mobile de fabrication additive selon la revendication 4, dans lequel le dispositif d'inertage (26) principal se situe à l'extérieur de l'enceinte de fabrication (14) et est supporté par le cadre autoporteur principal (12), et dans lequel le dispositif d'inertage (26) auxiliaire se situe à l'extérieur de l'enceinte de fabrication auxiliaire (114) et est supporté par le cadre autoporteur auxiliaire (112).

6. Atelier mobile de fabrication additive selon l'une des revendications précédentes, dans lequel, l'atelier comprenant un dispositif principal (42) de traitement de l'air circulant à l'intérieur de l'enceinte de fabrication principale (14), l'atelier comprend un dispositif auxiliaire de traitement (142) venant seconder le dispositif principal de traitement (42) dans le traitement de l'air circulant dans les différentes enceintes (14,114), ce dispositif auxiliaire de traitement (142) étant indépendant du dispositif principal de traitement (42).

7. Atelier mobile de fabrication additive selon la revendication 6, dans lequel le dispositif principal de traitement (42) se situe à l'extérieur de l'enceinte de fabrication (14) et est supporté par le cadre autoporteur principal (12), et dans lequel le dispositif auxiliaire de traitement (42) se situe à l'extérieur de l'enceinte de fabrication auxiliaire (114) et est supporté par le cadre autoporteur auxiliaire (112).

8. Atelier mobile de fabrication additive selon l'une des revendications précédentes, dans lequel, l'atelier comprenant une armoire électrique (44) principale regroupant les circuits de puissance et de commande des dispositifs principaux de traitement (42) et d'inertage (26) et de la machine principale (M1), l'atelier comprend une armoire électrique (144) auxiliaire regroupant les circuits de puissance et de commande du dispositif d'inertage (126) auxiliaire, du dispositif auxiliaire de traitement (142), et des machines de fabrication additive auxiliaires (M2,M3), cette armoire électrique (144) auxiliaire étant indépendante de l'armoire électrique (44) principale.

9. Atelier mobile de fabrication additive selon la revendication 8, dans lequel l'armoire électrique (44) principale se situe à l'extérieur de l'enceinte de fabrication principale (14) et est supportée par le cadre autoporteur principal (12), et dans lequel l'armoire électrique (144) auxiliaire se situe à l'extérieur de l'enceinte de fabrication auxiliaire (114) et est supportée par le cadre autoporteur auxiliaire (112).

10. Atelier mobile de fabrication additive selon l'une des revendications précédentes, dans lequel l'atelier mobile (10) comprend un dispositif de récupération (46) principal des eaux usées et un dispositif de récupération (146) auxiliaire des eaux usées, ce dispositif de récupération (146) étant indépendant du dispositif de récupération principal (46).

11. Atelier mobile de fabrication additive selon la revendication 10, dans lequel le dispositif de récupération (46) principal se situe à l'extérieur de l'enceinte de fabrication principale (14) et est supporté par le cadre autoporteur principal (12), et dans lequel le dispositif de récupération (146) auxiliaire se situe à l'extérieur de l'enceinte de fabrication auxiliaire (114) et est supporté par le cadre autoporteur auxiliaire (112).

12. Atelier mobile de fabrication additive selon l'une des revendications précédentes, dans lequel l'atelier mobile (10) comprend un module d'extension (70) du volume de l'enceinte de fabrication principale (14), ce module d'extension (70) étant autoporteur mais fixé au châssis autoporteur principal (12), et ce module d'extension (70) étant prévu en face de l'emplacement de la machine principale (M1) dans l'enceinte de fabrication principale (14).

13. Atelier mobile de fabrication additive selon l'une des revendications précédentes, dans lequel l'atelier mobile (10) comprend un ou des modules d'extension auxiliaires (170) du volume de l'enceinte de fabrication auxiliaire (114), chaque module d'extension auxiliaire (170) étant autoporteur mais fixé au châssis autoporteur auxiliaire (112), et un module d'extension auxiliaire (170) étant prévu en face de l'emplacement de chaque machine auxiliaire (M2,M3) dans l'enceinte de fabrication auxiliaire (14).

## Patentansprüche

1. Mobile Werkstatt (10) zur additiven Fertigung, wobei die Werkstatt einen selbsttragenden Hauptrahmen (12) enthält, der es ermöglicht, die Werkstatt straßentransporttauglich zu machen, wobei die Werkstatt einen Hauptfertigungsraum (14) enthält, der vom Hauptrahmen getragen und dicht von am Hauptrahmen befestigten Platten (16) verschlossen wird, wobei mindestens eine Hauptmaschine zur additiven Fertigung (M1) innerhalb des Hauptfertigungsraums installiert ist, wobei die Hauptmaschine zur additiven Fertigung (M1) mindestens eine Fertigungskammer enthält, innerhalb der ein Verfahren zur additiven Fertigung durchgeführt wird, das darin besteht, Pulver zur additiven Fertigung aufzubringen und die Körner dieses Pulvers mit Hilfe einer Energie- oder Wärmequelle zu schmelzen, wobei die Werkstatt eine Hauptinertisierungsvorrichtung (26) enthält, die es ermöglicht, die Fertigungskammer (CF1) der Maschine (M1) mit einem Inertgas zu versorgen, und es auch ermöglicht, das durch die von der additiven Fertigung innerhalb der Fertigungskammer (CF1) stammenden Rauchgase verschmutzte Inertgas aufzufangen, wobei ein Hauptverkehrsweg (32) im Hauptfertigungsraum (14) vorgesehen ist, um es einem Bediener zu erlauben, sich um die Hauptmaschine (M1) zur additiven Fertigung herum zu bewegen, wobei die Werkstatt eine Hauptschleuse (34) für den Eingang und Ausgang mindestens eines Bedieners enthält, und diese Hauptschleuse (34) vom Hauptrahmen (12) getragen und von am selbsttragenden Hauptrahmen (12) befestigten Platten (16) dicht verschlossen wird, eine innere Tür (38) es einem Bediener ermöglicht, sich zwischen der Hauptschleuse (34) und dem Hauptfertigungsraum (14) zu bewegen, und eine äußere Tür (40) es einem Bediener ermöglicht, sich zwischen der Hauptschleuse (34) und der Außenumgebung der Werkstatt (10) zu bewegen, wobei die mobile Werkstatt mindestens einen Hilfsfertigungsraum (114) enthält, der dicht mit dem Hauptfertigungsraum (14) verbunden ist, wobei mindestens eine Hilfsmaschine zur additiven Fertigung (M2, M3) innerhalb dieses Hilfsfertigungsraums (114) installiert ist, wobei die mobile Werkstatt einen selbsttragenden Hilfsrahmen (112) enthält, der diesen Hilfsfertigungsraum (114) trägt und vom selbsttragenden Hauptrahmen (12) unabhängig ist, wobei dieser Hilfsfertigungsraum (114) von am selbsttragenden Hilfsrahmen (112) befestigten Platten (16) dicht verschlossen wird, wobei ein Hilfsverkehrsweg (132) im Hilfsfertigungsraum (114) vorgesehen ist, um es einem Bediener zu ermöglichen, sich um jede Hilfsfertigungsmaschine (M2, M3) herum zu bewegen, die in diesem Hilfsfertigungsraum (114) installiert ist.

2. Mobile Werkstatt zur additiven Fertigung nach Anspruch 1, wobei zwei Hilfsmaschinen (M2, M3) zur additiven Fertigung innerhalb des Hilfsfertigungsraums (114) installiert sind.

3. Mobile Werkstatt zur additiven Fertigung nach einem der vorhergehenden Ansprüche, wobei jeder der Räume (14, 114) mindestens eine Tür (72, 172) enthält, und wobei ein Verbindungsflur (74) zwischen diesen zwei Türen eingebaut ist.

4. Mobile Werkstatt zur additiven Fertigung nach einem der vorhergehenden Ansprüche, wobei, da die Werkstatt (10) eine Hilfsinertisierungsvorrichtung (126) enthält, die es ermöglicht, die Fertigungskammer jeder Hilfsmaschine (M2, M3) mit einem Inertgas zu versorgen und die von der additiven Fertigung innerhalb jeder Fertigungskammer einer Hilfsmaschine (M2, M3) stammenden Rauchgase aufzufangen, die Hilfsinertisierungsvorrichtung (126) von der Hauptinertisierungsvorrichtung (26) unabhängig ist.

5. Mobile Werkstatt zur additiven Fertigung nach Anspruch 4, wobei die Hauptinertisierungsvorrichtung (26) sich außerhalb des Fertigungsraums (14) befindet und vom selbsttragenden Hauptrahmen (12) getragen wird, und wobei die Hilfsinertisierungsvorrichtung (26) sich außerhalb des Hilfsfertigungsraums (114) befindet und vom selbsttragenden Hilfsrahmen (112) getragen wird.

6. Mobile Werkstatt zur additiven Fertigung nach einem der vorhergehenden Ansprüche, wobei, da die Werkstatt eine Hauptaufbereitungsvorrichtung (42) der innerhalb des Hauptfertigungsraums (14) strömenden Luft enthält, die Werkstatt eine Hilfsaufbereitungsvorrichtung (142) enthält, die die Hauptaufbereitungsvorrichtung (42) bei der Aufbereitung der in den verschiedenen Räumen (14, 114) strömenden Luft unterstützt, wobei diese Hilfsaufbereitungsvorrichtung (142) von der Hauptaufbereitungsvorrichtung (42) unabhängig ist.

7. Mobile Werkstatt zur additiven Fertigung nach Anspruch 6, wobei die Hauptaufbereitungsvorrichtung (42) sich außerhalb des Fertigungsraums (14) befindet und vom selbsttragenden Hauptrahmen (12) getragen wird, und wobei die Hilfsaufbereitungsvorrichtung (42) sich außerhalb des Hilfsfertigungsraums (114) befindet und vom selbsttragenden Hilfsrahmen (112) getragen wird.

8. Mobile Werkstatt zur additiven Fertigung nach einem der vorhergehenden Ansprüche, wobei, da die Werkstatt einen Hauptelektroschrank (44) enthält, der die Leistungs- und Steuerkreise der Hauptaufbereitungs-(42) und Inertisierungsvorrichtungen (26) und der Hauptmaschine (M1) zusammenfasst, die Werkstatt einen Hilfselektroschrank (144) enthält, der die Leistungs- und Steuerkreise der Hilfsinertisierungsvorrichtung (126), der Hilfsaufbereitungsvorrichtung (142) und der Hilfsmaschinen zur additiven Fertigung (M2, M3) zusammenfasst, wobei dieser Hilfselektroschrank (144) vom Hauptelektroschrank (44) unabhängig ist.

9. Mobile Werkstatt zur additiven Fertigung nach Anspruch 8, wobei der Hauptelektroschrank (44) sich außerhalb des Hauptfertigungsraums (14) befindet und vom selbsttragenden Hauptrahmen (12) getragen wird, und wobei der Hilfselektroschrank (144) sich außerhalb des Hilfsfertigungsraums (114) befindet und vom selbsttragenden Hilfsrahmen (112) getragen wird.

10. Mobile Werkstatt zur additiven Fertigung nach einem der vorhergehenden Ansprüche, wobei die mobile Werkstatt (10) eine Hauptabwasserrückgewinnungsvorrichtung (46) und eine Hilfsabwasserrückgewinnungsvorrichtung (146) enthält, wobei diese Rückgewinnungsvorrichtung (146) von der Hauptrückgewinnungsvorrichtung (46) unabhängig ist.

11. Mobile Werkstatt zur additiven Fertigung nach Anspruch 10, wobei die Hauptrückgewinnungsvorrichtung (46) sich außerhalb des Hauptfertigungsraums (14) befindet und vom selbsttragenden Hauptrahmen (12) getragen wird, und wobei die Hilfsrückgewinnungsvorrichtung (146) sich außerhalb des Hilfsfertigungsraums (114) befindet und vom selbsttragenden Hilfsrahmen (112) getragen wird.

12. Mobile Werkstatt zur additiven Fertigung nach einem der vorhergehenden Ansprüche, wobei die mobile Werkstatt (10) ein Erweiterungsmodul (70) des Volumens des Hauptfertigungsraums (14) enthält, wobei dieses Erweiterungsmodul (70) selbsttragend aber am selbsttragenden Hauptgestell (12) befestigt ist, und dieses Erweiterungsmodul (70) gegenüber dem Standort der Hauptmaschine (M1) im Hauptfertigungsraum (14) vorgesehen ist.

13. Mobile Werkstatt zur additiven Fertigung nach einem der vorhergehenden Ansprüche, wobei die mobile Werkstatt (10) eines oder mehr Hilfserweiterungsmodule (170) des Volumens des Hilfsfertigungsraums (114) enthält, wobei jedes Hilfserweiterungsmodul (170) selbsttragend aber am selbsttragenden Hilfsgestell (112) befestigt ist, und ein Hilfserweiterungsmodul (170) gegenüber dem Standort jeder Hilfsmaschine (M2, M3) im Hilfsfertigungsraum (14) vorgesehen ist.

## Claims

1. Mobile additive manufacturing installation (10), the installation comprising a main self-supporting frame (12) which makes it possible to render the installation transportable by road, the installation comprising a main manufacturing housing (14) supported by the main frame and closed in leaktight fashion by panels (16) fixed to the main frame, at least one main additive manufacturing machine (M1) being installed inside the main manufacturing housing, the main additive manufacturing machine (M1) comprising at least one manufacturing chamber inside which is carried out an additive manufacturing process consisting in depositing additive manufacturing powder and in fusing the grains of this powder using a source of energy or of heat, the installation comprising a main inerting device (26) which makes it possible to supply the manufacturing chamber (CF1) of the machine (M1) with an inert gas and which also makes it possible to capture the inert gas contaminated by the fumes resulting from the additive manufacturing inside the manufacturing chamber (CF1), a main circulation path (32) being provided in the main manufacturing housing (14) in order to make it possible for an operator to circulate around the main additive manufacturing machine (M1), the installation comprising a main airlock (34) for the entry and the exit of at least one operator, and this main airlock (34) being supported by the main frame (12) and closed in leaktight fashion by panels (16) fixed to the main self-supporting frame (12), an internal door (38) makes it possible for an operator to circulate between the main airlock (34) and the main manufacturing housing (14) and an external door (40) makes it possible for an operator to circulate between the main airlock (34) and the outside of the installation (10), the mobile installation comprising at least one auxiliary manufacturing housing (114) connected in leaktight fashion to the main manufacturing housing (14), at least one auxiliary additive manufacturing machine (M2, M3) being installed inside this auxiliary manufacturing housing (114), the mobile installation comprising an auxiliary self-supporting frame (112) which supports this auxiliary manufacturing housing (114) and which is independent of the main self-supporting frame (12), this auxiliary manufacturing housing (114) being closed in leaktight fashion by panels (16) fixed to the auxiliary self-supporting frame (112), an auxiliary circulation path (132) being provided in the auxiliary manufacturing housing (114) in order to make it possible for an operator to circulate around each auxiliary manufacturing machine (M2, M3) installed in this auxiliary manufacturing housing (114).

2. Mobile additive manufacturing installation according to Claim 1, in which two auxiliary additive manufacturing machines (M2, M3) are installed inside the auxiliary manufacturing chamber (114).

3. Mobile additive manufacturing installation according to either of the preceding claims, in which each of the housings (14, 114) comprises at least one door (72, 172) and in which a junction corridor (74) is installed between these two doors

4. Mobile additive manufacturing installation according to one of the preceding claims, in which, the installation (10) comprising an auxiliary inerting device (126) making it possible to supply the manufacturing chamber of each auxiliary machine (M2, M3) with an inert gas and to capture the fumes resulting from the additive manufacturing inside each manufacturing chamber of an auxiliary machine (M2, M3), the auxiliary inerting device (126) is independent of the main inerting device (26).

5. Mobile additive manufacturing installation according to Claim 4, in which the main inerting device (26) is located outside the manufacturing housing (14) and is supported by the main self-supporting frame (12), and in which the auxiliary inerting device (126) is located outside the auxiliary manufacturing housing (114) and is supported by the auxiliary self-supporting frame (112).

6. Mobile additive manufacturing installation according to one of the preceding claims, in which, the installation comprising a main device (42) for treatment of the air circulating inside the main manufacturing housing (14), the installation comprises an auxiliary treatment device (142) which will assist the main treatment device (42) in the treatment of the air circulating in the different housings (14, 114), this auxiliary treatment device (142) being independent of the main treatment device (42).

7. Mobile additive manufacturing installation according to Claim 6, in which the main treatment device (42) is located outside the manufacturing housing (14) and is supported by the main self-supporting frame (12), and in which the auxiliary treatment device (142) is located outside the auxiliary manufacturing housing (114) and is supported by the auxiliary self-supporting frame (112).

8. Mobile additive manufacturing installation according to one of the preceding claims, in which, the installation comprising a main electrical cabinet (44) bringing together the power and control circuits of the main treatment (42) and inerting (26) devices and of the main machine (M1), the installation comprises an auxiliary electrical cabinet (144) bringing together the power and control circuits of the auxiliary inerting device (126), of the auxiliary treatment device (142) and of the auxiliary additive manufacturing machines (M2, M3), this auxiliary electrical cabinet (144) being independent of the main electrical cabinet (44).

9. Mobile additive manufacturing installation according to Claim 8, in which the main electrical cabinet (44) is located outside the main manufacturing housing (14) and is supported by the main self-supporting frame (12), and in which the auxiliary electrical cabinet (144) is located outside the auxiliary manufacturing housing (114) and is supported by the auxiliary self-supporting frame (112).

10. Mobile additive manufacturing installation according to one of the preceding claims, in which the mobile installation (10) comprises a main device (46) for recovery of the waste waters and an auxiliary device (146) for recovery of the waste waters, this recovery device (146) being independent of the main recovery device (46).

11. Mobile additive manufacturing installation according to Claim 10, in which the main recovery device (46) is located outside the main manufacturing housing (14) and is supported by the main self-supporting frame (12), and in which the auxiliary recovery device (146) is located outside the auxiliary manufacturing housing (114) and is supported by the auxiliary self-supporting frame (112).

12. Mobile additive manufacturing installation according to one of the preceding claims, in which the mobile installation (10) comprises a module (70) for extension of the volume of the main manufacturing housing (14), this extension module (70) being self-supporting but fixed to the main self-supporting mounting (12), and this extension module (70) being provided opposite the location of the main machine (M1) in the main manufacturing housing (14).

13. Mobile additive manufacturing installation according to one of the preceding claims, in which the mobile installation (10) comprises one or more auxiliary modules (170) for extension of the volume of the auxiliary manufacturing housing (114), each auxiliary extension module (170) being self-supporting but fixed to the auxiliary self-supporting mounting (112), and an auxiliary extension module (170) being provided opposite the location of each auxiliary machine (M2, M3) in the auxiliary manufacturing housing (114).
